# EUROPEAN PATENT SPECIFICATION

(11) **EP 1 694 459 B1**
(45) Date of publication and mention of the grant of the patent: **07.05.2008**
(21) Application number: 04790667.2
(22) Date of filing: 20.10.2004
(51) Int. Cl.: B23C 3/35, B25B 5/10, B25B 5/08

(54) **CLAMP FOR A KEY DUPLICATING MACHINE**
KLAMPE FÜR EINE SCHLÜSSELKOPIERMASCHINE
PINCE POUR UNE MACHINE A TAILLER LES CLES

(30) Priority: 22.10.2003 IT VE20030045
(43) Date of publication of application: 30.08.2006
(73) Proprietor: SILCA S.p.A., I-31029 Vittorio Veneto (Treviso) (IT)
(72) Inventor: DA RODDA, Oreste, I-31020 Revine Lago (IT); PERENCIN, Amedeo, I-31030 Colfosco-Susegana (IT)
(74) Representative: Piovesana, Paolo
(86) International application number: PCT/EP2004/011859
(87) International publication number: WO 2005/039810

(56) References cited:
- US-A- 1 885 002
- US-A- 3 286 597
- US-A- 3 625 111
- US-A- 2002 182 022

## Description

The present invention relates to a clamp for a key duplicating machine according to the preamble of claim 1. An example of such a clamp is disclosed by US 2002/0182022 A1.

Key duplicating machines generally comprise a carriage on which two clamps are fixed to hold the original key to be duplicated and the blank key to be cut in accordance with the notching pattern present on the original key respectively, the blank key and the key to be duplicated being both disposed with their shank axes parallel

An arbor for a milling cutter and a support for a feeler are fixed to the duplicating machine structure in a position facing the clamps.

A pin comprising a milled portion is fixed to the carriage to retain the two jaws of each clamp in a perfectly superposed condition. These are of square plan and have their facing surfaces profiled identically, or differently in order to be able to retain keys of different shape between them. In this respect, the sides of the facing surfaces of the two jaws can be either flat or comprise ribs complementary to the slots which may be present on the key to be retained between the jaws.

Traditional means can also be provided between the lower jaw and the carriage to ensure correct positioning of the jaws in four different stable positions, angularly rotated through 90° to each other, in order to be able to use the four sides of each jaw and hence increase the number of different key profiles which can be retained by the clamp.

A knob provided to lock the two jaws, possibly with the key interposed, to the carriage and hence to the structure of the duplicating machine by a single operation is screwable on the threaded portion of the pin.

To ensure that the key shank retained by the clamp is perpendicular to the feeler or cutter axis, an element is generally fixed to the carriage to form a support/counteracting element for the fixed lower jaw of the clamp.

As the distance between the axis of the hole in the lower jaw and each lateral surface of the jaw may not be rigorously constant due to machining defects, the lateral surface in contact with the counteracting element may for certain jaw positions be slightly separated from the counteracting element and for other positions (distance exceeding the pin axis platen distance) it may be impossible to seat the jaw.

To eliminate this drawback, the counteracting element is generally fixed to the carriage at a distance from the axis of the threaded pin which corresponds to the minimum distance between the hole axis and the lateral surface of the jaw, the other surfaces then being ground to make their distance from the hole axis equal.

The result is a laborious operation which is repeated when the clamp needs to be completely replaced.

An object of the invention is to eliminate this drawback by providing an improved clamp which enables the jaws to be maintained with their lateral surfaces perfectly perpendicular to the cutter and feeler axis for any position into which they are rotated relative to the pin.

This and further objects which will be apparent from the ensuing description are attained according to the invention by a clamp for key duplicating machines as described in claim 1.

A preferred embodiment of the invention is described in detail hereinafter with reference to the accompanying drawings, in which:

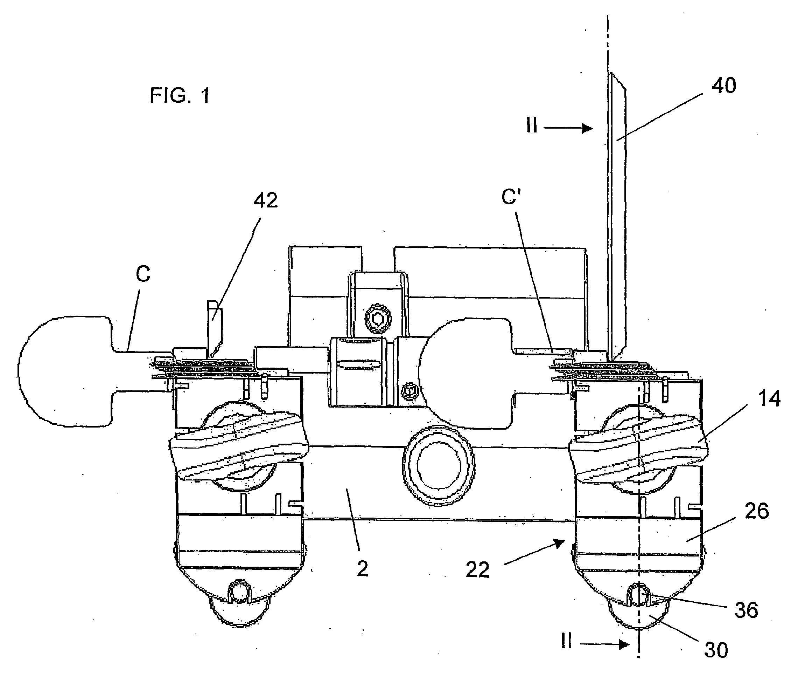

Figure 1 is a plan view of an improved clamp according to the invention;

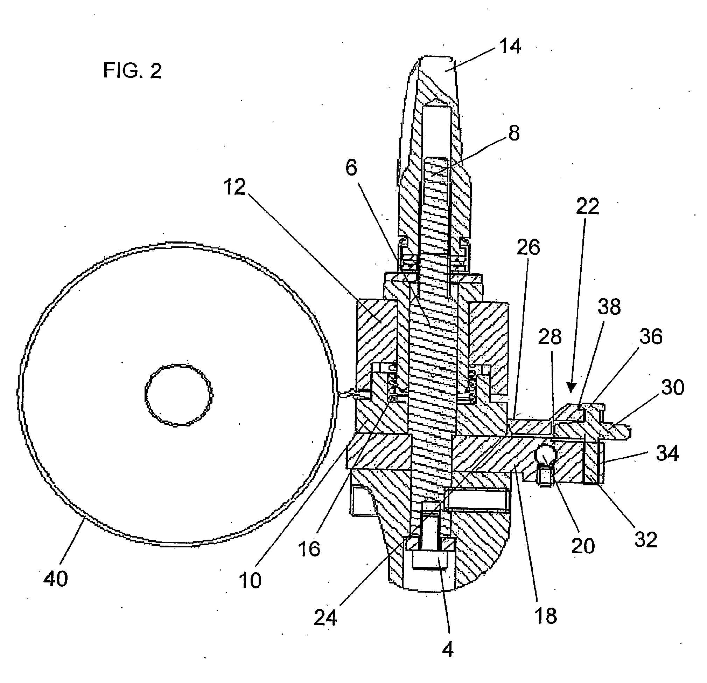

Figure 2 is a section on the line II-II of Figure 1.

As can be seen from the figures, the improved clamp according to the invention comprises a carriage 2 by means of which the clamp is fixed to the duplicating machine structure (not shown in the drawings).

In the illustrated example two identical clamps are shown, to clamp the key C to be duplicated and the blank key C'. In the ensuing description reference will therefore be made only to a single clamp.

A pin 6 upperly provided with a threaded portion 8 is fixed to the carriage 2, preferably by a screw 4.

The purpose of the pin 6 is to retain the two clamp jaws 10, 12 in a perfectly superposed condition. These are of square plan and have their facing surfaces identically or differently profiled to enable differently shaped keys to be retained between them. More specifically, the sides of the facing surfaces of the two jaws can be either flat or comprise ribs complementary to the slots which may be present on the key to be retained between the jaws.

Traditional means, not shown in the drawings, can also be provided between the lower jaw 10 and the carriage 2 to ensure correct positioning of the two jaws in four different stable positions, angularly rotated through 90° to each other, in order to be able to use the four sides of each jaw and hence increase the number of different key profiles which can be retained by the clamp.

A knob 14 provided to lock the two jaws, against the reaction of a spring 16 interposed between them and possibly with the key interposed, to the carriage 2 and hence to the structure of the duplicating machine by a single operation is screwable on the threaded portion of the pin.

A counteracting element 22 having a surface 24 facing the lateral surface of the lower jaw, said surface 24 being slightly inclined to form an acute angle with the upper surface 26 of the counteracting element 22, is hinged about a pin 20 to the platen 18 forming the support for the lower jaw 10.

Said counteracting element comprises a seat 28 housing a convex head 30 of a threaded pin 32 which engages in a corresponding hole 34 provided in the platen 18, the convex head extending upperly into a mushroom shaped appendix 36, the head of which rests on a step 38 provided on the counteracting element.

The clamp operates in the following manner: firstly the convex head 30 is rotated in the direction causing the pin 32 to screw into the hole 34. As a result of this operation, the mushroom shaped appendix engaged in the step 38 rotates (in the clockwise direction when viewing the drawings) the counteracting element 22, which withdraws its surface 24 from the lateral surface of the lower jaw 10. The knob 14 is then disengaged from the pin 6 to enable both the jaws 10, 12 to be withdrawn and be re-inserted into the pin 6 such that those particular ribs and slots which serve to retain that particular type of key to be machined face the cutter 40 and feeler 42.

The blank key C' and the key C to be duplicated are then inserted between the jaws 10 and 12, the knob 14 being screwed down on the threaded portion 8 of the pin 6 to prevent their disengagement.

From the aforegoing it is apparent that the clamp of the invention presents numerous advantages, and in particular:
1. clamp insensitivity to possible variations in distance between the clamp surface and hole axis;
2. ease of adaptation to distance variations;
3. applicability to almost all commercially available clamp types.

## Claims

1. A clamp for a key duplicating machine comprising a threaded vertical pin (6, 8) rigid with a carriage (2) and engaged in the holes of two superposed jaws (10, 12) of square plan retained by a knob (14) and having flat lateral surfaces wherein said jaws may be positioned in four different stable positions angularly rotated through 90° to each other, and a counteracting member (22) disposed on the side of the jaw opposite to the key machining elements (40, 42) and said counteracting member (22) having at least one jaw contacting surface facing one of said flat lateral surfaces of one of said superposed jaws **characterised in that** the distance between said jaw contacting surface and the pin axis can be adjusted to always maintain the jaw contacting surface parallel to itself and to maintain the jaws with their lateral surface perfectly perpendicular to the key machining elements (40, 42).

2. A clamp as claimed in claim 1, **characterised by** comprising a platen (18) on which the lower jaw (10) and the counteracting member (22) rest.

3. A clamp as claimed in claim 2, **characterised in that** the counteracting member is fixed to the platen (18).

4. A clamp as claimed in claim 3, **characterised in that** the counteracting member presents an inclined surface (24).

5. A clamp as claimed in claim 1, **characterised by** comprising means (30, 32, 34) for finely adjusting the counteracting member.

6. A clamp as claimed in claim 2, **characterised in that** the counteracting member (22) comprises a seat (28) housing the convex head (30) of a threaded pin (32) which engages in a corresponding hole (34) provided in the platen (18).

7. A clamp as claimed in claim 6, **characterised in that** the convex head (30) extends into a mushroom shaped appendix (36), the head of which engages in a step (38) provided in the counteracting member.

## Patentansprüche

1. Spannbacke für eine Schlüsselkopiermaschine, umfassend einen vertikalen Gewindestift (6, 8), der starr mit einem Schlitten (2) verbunden ist und in die Löcher der zwei übereinander liegenden Backen (10, 12) mit quadratischem Grundriss greift, die von einem Knopf (14) gehalten werden und flache Seitenflächen aufweisen, wobei die Backen in vier unterschiedliche stabile Positionen positioniert werden können, die im 90°-Winkel zueinander gedreht sind, sowie ein gegenläufiges Element (22), das an der Seite der Backe angeordnet ist, die sich gegenüber den Schlüsselmaschinenelementen (40, 42) befindet, und das gegenläufige Element (22) weist mindestens eine Backenkontaktfläche auf, die einer der flachen Seitenflächen einer der übereinander liegenden Backen zugewandt ist, **dadurch gekennzeichnet, dass** der Abstand zwischen der Backenkontaktfläche und der Stiftachse so eingestellt werden kann, dass die Backenkontaktfläche stets parallel gehalten wird und die Backen mit ihrer Seitenfläche genau senkrecht zu den Schlüsselmaschinenelementen (40, 42) gehalten werden.

2. Spannbacke nach Anspruch 1, **dadurch gekennzeichnet, dass** sie eine Auflageplatte (18) umfasst, auf der eine untere Backe (10) und das gegenläufige Element (22) aufliegen.

3. Spannbacke nach Anspruch 2, **dadurch gekennzeichnet, dass** das gegenläufige Element an der Auflageplatte (18) angebracht ist.

4. Spannbacke nach Anspruch 3, **dadurch gekennzeichnet, dass** das gegenläufige Element eine geneigte Fläche (24) bietet.

5. Spannbacke nach Anspruch 1, **dadurch gekennzeichnet, dass** sie Einrichtungen (30, 32, 34) zum Feineinstellen des gegenläufigen Elements umfasst.

6. Spannbacke nach Anspruch 2, **dadurch gekennzeichnet, dass** das gegenläufige Element (22) einen Sitz (28) umfasst, der den konvex gewölbten Kopf (30) eines Gewindestifts (32) aufnimmt, welcher in ein in der Auflageplatte (18) bereitgestelltes entsprechendes Loch (34) greift.

7. Spannbacke nach Anspruch 6, **dadurch gekennzeichnet, dass** sich der konvex gewölbte Kopf (30) in einen pilzförmigen Ansatz (36) erstreckt, dessen Kopf in eine Stufe (38) greift, die in dem gegenläufigen Element bereitgestellt ist.

## Revendications

1. Dispositif de serrage pour une machine à copier des clés, comprenant une broche verticale filetée (6, 8) solidaire d'un chariot (2) et pénétrant dans des trous de deux mâchoires superposées (10, 12) à face carrée retenu par un bouton (14) et ayant des surfaces latérales plates, lesdites mâchoires pouvant être positionnées à quatre positions stables différentes par rotation angulaire de 90° l'une par rapport à l'autre, et un élément antagoniste (22) disposés sur le côté de la mâchoire à l'opposé des éléments d'usinage de clé (40, 42) et ledit élément antagoniste (22) ayant au moins une surface de contact de mâchoire faisant face à l'une desdites surfaces latérales plates de l'une desdites mâchoires superposées, **caractérisé en ce que** la distance entre ladite surface de contact de mâchoire et ledit axe de broche peut être ajustée pour toujours maintenir la surface de contact de mâchoire parallèle à lui-même et pour maintenir les mâchoires avec leur surface latérale parfaitement perpendiculaires aux éléments d'usinage de clé (40, 42).

2. Dispositif de serrage comme revendiqué dans la revendication 1, **caractérisé en ce qu'**il comprend une platine (18) sur laquelle la mâchoire inférieure (10) et élément antagoniste (22) reposent.

3. Dispositif de serrage comme revendiqué dans la revendication 2, **caractérisé en ce que** l'élément antagoniste est fixé à la platine (18).

4. Dispositif de serrage comme revendiqué dans la revendication 4, **caractérisé en ce que** l'élément antagoniste présente une surface inclinée (24).

5. Dispositif de serrage comme revendiqué dans la revendication 1, **caractérisé en ce qu'**il comprend un moyen (30, 32, 34) pour ajuster finement élément antagoniste.

6. Dispositif de serrage comme revendiqué dans la revendication 2, **caractérisé en ce que** l'élément antagoniste (22) comprend un siège (28) recevant la tête convexe (30) d'une broche filetée (32) qui pénètre dans un trou correspondant (34) ménagé dans la platine (18).

7. Dispositif de serrage comme revendiqué dans la revendication 6, **caractérisé en ce que** la tête convexe (30) s'étend en un appendice en forme de champignon (36) dont la tête pénètre dans un ressaut (38) prévu dans l'élément antagoniste.
